# EUROPÄISCHE PATENTSCHRIFT

(11) **EP 3 894 153 B1**
(45) Veröffentlichungstag und Bekanntmachung des Hinweises auf die Patenterteilung: **02.10.2024**
(21) Anmeldenummer: 19820988.4
(22) Anmeldetag: 11.12.2019
(51) Int. Cl.: B27G 13/00, B23C 5/22

(54) **WERKZEUG ZUR ROTIERENDEN UND SPANABHEBENDEN BEARBEITUNG VON WERKSTÜCKEN**
TOOL FOR THE ROTARY AND CUTTING MACHINING OF WORKPIECES
OUTIL DESTINÉ A UN USINAGE ROTATIF ET PAR ENLÈVEMENT DE COPEAUX DE PIÈCES

(30) Priorität: 11.12.2018 CH 15242018
(43) Veröffentlichungstag der Anmeldung: 20.10.2021
(73) Patentinhaber: Kunststoffwerk AG Buchs, 9470 Buchs (CH)
(72) Erfinder: LJATIFI, Mehmed, 9470 Buchs (CH); RUDOLPH, Martin, 6714 Nüziders (AT); BARANDUN, Gion Andrea, 8045 Zürich (CH); SCHÖNENBERGER, Donat, 9000 St. Gallen (CH)
(74) Vertreter: Swisspat Riederer Hasler Patentanwälte AG
(86) Internationale Anmeldenummer: PCT/CH2019/050031
(87) Internationale Veröffentlichungsnummer: WO 2020/118460

(56) Entgegenhaltungen:
- DE-A1- 10 359 854
- DE-A1- 102010 036 869
- DE-A1- 19 934 125
- DE-A1- 4 009 461
- JP-A- H07 103 226
- US-A- 2 325 746
- US-A- 2 357 088
- US-A- 5 232 316
- US-A- 5 408 983
- US-A- 5 605 420

## Beschreibung

### TECHNISCHES GEBIET DER ERFINDUNG

Die Erfindung betrifft ein Werkzeug zur rotierenden und spanabhebenden Bearbeitung von Werkstücken gemäss Oberbegriff des Anspruchs 1.

### HINTERGRUND DER ERFINDUNG

Werkzeuge zur rotierenden und spanabhebenden Bearbeitung von Werkstücken, insbesondere solche aus Holz oder Kunststoff, bestehen in der Regel aus Metall, insbesondere Stahl. Deren Herstellung ist teuer, da diese aus Edelstahl in hoher Präzision hergestellt werden müssen. Für die Aufnahme der Schneiden können am Werkzeugkörper nutenförmige Aufnahmen mit Hinterschneidungen vorgesehen sein, in welchen die Schneiden mittels eines Klemmteils festgeklemmt werden können. Damit die Schneiden im Betrieb nicht davonfliegen können, sind meist formschlüssige Verbindungen zwischen dem Werkzeugkörper und den Schneiden vorgesehen.

### AUFGABE

Es ist eine Aufgabe der vorliegenden Erfindung, ein Werkzeug zur rotierenden und spanabhebenden Bearbeitung von Werkstücken zur Verfügung zu stellen, das sich kostengünstig mit der nötigen Präzision herstellen lässt. Ein weiteres Ziel ist es, ein Werkzeug bereitzustellen, das allzeit eine sichere Bedienung gewährleistet und die Gefahr und das Ausmass eines Unfalls aufgrund eines Materialschadens beim Betreiben des Werkzeugs minimiert.

### BESCHREIBUNG

Die Erfindung betrifft ein Werkzeug zur rotierenden und spanabhebenden Bearbeitung von Werkstücken, das einen Werkzeugkörper mit einer Mehrzahl von am Werkzeugkörper angeordneten Schneiden, welche in Schneidanordnungen angeordnet sind, umfasst. Die Schneiden sind am Umfang des Werkzeugkörpers angeordnet und stehen in radialer Richtung von diesem ab.

Die Lösung der gestellten Aufgabe gelingt bei einem Werkzeug durch die im kennzeichnenden Abschnitt des Patentanspruchs 1 angeführten Merkmale. Weiterbildungen und/oder vorteilhafte Ausführungsvarianten sind Gegenstand der abhängigen Patentansprüche.

Erfindungsgemäss ist der Werkzeugkörper aus Kunststoff hergestellt, und die Schneiden sind im Werkzeugkörper integriert. Zusätzlich ist ein Sicherungselement in Gestalt eines im Werkzeugkörper integrierten Sicherungsbands vorgesehen, das die Schneideanordnungen teilweise umfasst, sodass die Schneiden sich im Betrieb nicht vom Werkzeugkörper lösen können. Das erfindungsgemässe Werkzeug hat den Vorteil, dass es kostengünstig herstellbar ist. Alternativ kann das Werkzeug auch so beschrieben werden, dass ein Sicherungselement in Gestalt eines Bandes so angeordnet ist, dass es ein Loslassen der Schneiden nach Auflösung ihrer Verbindung zum Werkzeugkörper verhindert. Ein solches Werkzeug bietet gegenüber einem mit lösbaren Sicherungen der Schneiden, wie sie in alternativen Werkzeugen anzutreffen sind, eine grössere Sicherheit beim Betreiben eines rotierenden Werkzeuges, da das Sicherungselement den Verlust der Schneide verunmöglicht. Durch das Sicherungselement wie im erfindungsgemässen Werkzeug sind die Schneideanordnungen mit den Schneiden auch nach Auflösen ihrer Befestigung am Werkzeugkörper festgehalten und ermöglichen den weiteren Betrieb des Werkzeuges, ohne dessen abrupten Unterbruch zu erfordern.

Das Sicherungsband kann auch die Schneiden teilweise umfassen. Dies führt ebenfalls dazu, dass sich die Schneiden während dem Betrieb nicht vom Werkzeugkörper lösen können. Im Falle einer Auflösung der Verbindung zwischen einer Schneide und dem Werkzeugkörper werden die Schneiden am Werkzeugkörper festgehalten, was ebenfalls den weiteren Betrieb des Werkzeuges gewährleistet.

Die Verbindung zwischen den Schneiden und dem Werkzeugkörper kann durch eine formschlüssige Verbindung zum Ausdruck kommen, wodurch die Schneiden im Werkzeugkörper integriert werden.

Vorteilhafterweise ist das Sicherungselement ein den Werkzeugkörper in Umfangsrichtung umfassendes Band. Dies ermöglicht das Erreichen einer gleichmässigen Gewichtsverteilung über den Umfang auf dem Werkzeug und eine kostengünstige Herstellung des Sicherungselementes. Gleichzeitig kann das Band durch diese Form die Zugkräfte in Umfangsrichtung besser aufnehmen.

Das Band als Sicherungselement besteht aus einem Faser-Verbund-Werkstoff mit einem Fasergehalt von mindestens 10%. Dabei können die Fasern aus Glas, Aramid oder Kohlenstoff bestehen. Der Vorteil der Verwendung von Faser-Verbund-Werkstoff für das Sicherungselement besteht darin, dass die Faser-Verbund-Werkstoffe bei einem minimalen Eigengewicht sehr grosse Zug-Kräfte aufnehmen können. Das Sicherungselement ist vorgesehen, hauptsächlich auf Zug-Kräfte belastet zu werden.

Der Faser-Verbund-Werkstoff weist unidirektionale und in Umfangsrichtung des Werkzeugs ausgerichtete Fasern auf. In einer nicht erfindungsgemäßen Ausführungsform sind die Fasern des Faser-Verbund-Werkstoffs als Gewebe vorhanden. Bei der Verwendung von einem Gewebe als Struktur der Fasern ist insbesondere ein Organoblech zu bevorzugen. Das Organoblech bietet aufgrund seiner thermoplastischen Matrix den Vorteil der Warmumformbarkeit, von welchem bei der Herstellung der stoffschlüssigen Verbindung zwischen dem Sicherungselement und dem Werkzeugkörper Gebrauch gemacht werden kann.

In einer anderen Ausführungsform der Erfindung sind als Fasern im Sicherungselement Endlosfasern bevorzugt. Aufgrund ihrer Länge bieten diese Fasern die Möglichkeit den Werkzeugkörpers in seiner Umfangsrichtung zu umwickeln.

Gemäß der Erfindung weist der Faser-Verbund-Werkstoff unidirektionale Fasern auf und ist so angeordnet, dass diese Fasern in Umfangsrichtung des Werkzeuges ausgerichtet sind. Das Sicherungselement ist derart angeordnet, dass es mehrheitlich auf Zug beansprucht ist. Die unidirektionalen Fasern in Umfangsrichtung des Werkzeuges sind hervorragend für die Aufnahme der in diese Richtung wirkenden Zugkräfte geeignet.

In einer anderen nicht erfindungsgemäßen Ausführungsform wird das Sicherungselement durch eine Umwicklung des Werkzeugkörpers mittels einer Endlosfaser realisiert.

Die Endlosfasern werden bevorzugt parallel zur Breitseite der Schneiden gewickelt. Dadurch kann die Endlosfaser nahe an den Schneiden verlegt sein, um mit einem minimalen Gebrauch an Endlosfasern für die Sicherung der Schneiden zu sorgen.

In einer weiteren bevorzugten Ausführungsform der Erfindung sind die Schneiden am Werkzeugkörper formschlüssig angebracht. Die Schneiden bestehen vorteilhafterweise aus Metall, insbesondere aus Stahl, aber auch andere Materialien sind denkbar. Die Befestigung der Schneiden an den Werkzeugkörper entsteht entweder während der Herstellung durch Spritzgiessen des Werkzeugkörpers um die Schneiden oder durch Anbringen der Schneiden in Aussparungen, welche durch Nachbearbeitung des Werkzeugkörpers nach dessen Herstellung realisiert wurden und die Gestalt aufweisen, um mit den Schneiden eine formschlüssige Verbindung einzugehen.

Jede Schneide weist bevorzugt einen Schlitz auf, durch welchen das Sicherungselement geführt ist. Diese formschlüssige Verbindung führt zu einer Sicherung der Schneiden durch das Sicherungselement. Der Schlitz ist dabei entlang der Breitseite der Schneide angebracht.

Der Werkzeugkörper weist vorteilhafter Weise einen inneren und äusseren Ring auf, welche mittels einer Mehrzahl von Rippen miteinander verbunden sind. Die Rippen sorgen für eine Übertragung der Kräfte und Momente vom inneren zum äusseren Ring und umgekehrt und weisen selber ein geringes Gewicht auf. Diese Ausgestaltung der Bauteile entspricht der Leichtbauweise. Der Energiebedarf für das Betreiben eines Werkzeuges nimmt durch Abnahme seines Gewichtes stark ab.

Der Innere Ring ist bevorzugt als Nabe ausgebildet. Dieser ermöglicht die Befestigung des Werkzeugs an einer Welle, welche das Werkzeug antreiben soll.

Bei der Herstellung des Werkzeugkörpers ist zu beachten, dass bevorzugt der innere und äussere Ring und die Rippen im Werkzeugkörper im Wesentlichen die gleiche Wandstärke besitzen. Dadurch reduziert sich das Risiko einer Unwucht am Werkzeug, was wiederum für einen zuverlässigen Betrieb eines rotierenden Werkzeuges von grosser Bedeutung ist. Vorteilhafterweise sind die Rippen im Werkzeugkörper radial ausgerichtet. Dies ermöglicht bei gleichbleibender Funktionalität Material und dadurch auch Gewicht zu sparen.

Das Sicherungselement ist bevorzugt stoffschlüssig mit dem Werkzeugkörper verbunden. Idealerweise wird diese Stoffschlüssigkeit durch die Verwendung von Kunststoff sowohl für den Werkzeugkörper und als auch für die Matrix des das Sicherungselement bildenden Verbundmaterials erreicht. Nach Erhitzen beider Bauteile und Erreichen einer bestimmten materialspezifischen Temperatur entsteht ein Bindungsmittel an der Fläche zwischen den Bauteilen und ein Schmelzvorgang stellt sich ein, welcher die beiden Bauteile stoffschlüssig miteinander verbindet.

In einer anderen nicht erfindungsgemäßen Ausführungsform ist das Sicherungselement durch ein Metallgitter realisiert. Dieses besitzt in seiner Gitterstruktur Aussparungen für die Schneiden, um mit diesen eine formschlüssige Verbindung einzugehen. Der Werkzeugkörper muss nach Einspannen der Schneiden und des Metallgitters aufgespritzt werden, so dass eine sich eine formschlüssige Verbindung zwischen dem Werkzeugkörper und dem Metallgitter ergibt.

Die Schneiden im Werkzeugkörper sind vorzugsweise nicht auswechselbar. Dies ermöglicht, den Schneiden im Werkzeugkörper eine stärkere Befestigung zu gewährleisten. Bei einer Ausführung, bei welcher die Schneiden im Werkzeugkörper nicht auswechselbar sind, ist von einem einmaligen Gebrauch des Werkzeuges auszugehen, wobei unter einmaligem Gebrauch des Werkzeuges die Nutzung des Werkzeuges bis zum Eintreten des Zeitpunktes von dessen Untauglichkeit gemeint ist. Andernfalls kann bei Auswechselbarkeit der Schneiden jede Schneide einzeln zum Beispiel aus dem Werkzeugkörper entfernt, nachgeschliffen und wieder im Werkzeugkörper angebracht werden.

Eine weitere bevorzuge Ausführungsform weist ein Verbindungselement auf, welches die Schneiden einer Schneideanordnung untereinander verbindet. Dieses Verbindungselement kann ein Bolzen sein, welches durch ein Loch in den Schneiden einer Schneideanordnung geführt ist. Der Bolzen ist mit dem Sicherungselement formschlüssig verbunden. Durch die formschlüssige Verbindung zwischen dem Sicherungselement und dem Bolzen, welcher zur Schneideanordnung gehört, ergibt sich eine formschlüssige Verbindung zwischen dem Sicherungselement und der Schneideanordnung.

Genannte optionale Merkmale können in beliebiger Kombination verwirklicht werden, soweit sie sich nicht gegenseitig ausschliessen. Insbesondere dort wo bevorzugte Bereiche angegeben sind, ergeben sich weitere bevorzugte Bereiche aus Kombinationen der in den Bereichen genannten Minima und Maxima.

Weitere Vorteile und Merkmale der Erfindung ergeben sich aus der nachfolgenden Beschreibung von Ausführungsbeispielen der Erfindung unter Bezugnahme auf schematische Darstellungen.

### KURZBESCHREIBUNG DER FIGUREN

Ausführungsbeispiele der Erfindung werden nachfolgend anhand der Figuren beispielhaft beschrieben. Es zeigen in nicht massstabsgetreuer, schematischer Darstellung:
- Figur 1:: eine dreidimensionale Darstellung eines ersten Ausführungsbeispiels eines Werkzeugs zur rotierenden und spanabhebenden Bearbeitung von Werkstücken mit einem Werkzeugkörper und einer Mehrzahl von am Werkzeugkörper fest angeordneten Schneidenanordnungen, die durch ein gemeinsames Sicherungselement gesichert sind;
- Figur 2:: eine Draufsicht auf das Werkzeug von Figur 1;
- Figur 3:: einen Querschnitt durch auf das Werkzeug von Figur 1 entlang der Linie III-III;
- Figur 4:: eine perspektivische Ansicht einer einzelnen Schneidenanordnung bestehend aus mehreren voneinander beabstandeten Schneiden, die durch einen Bolzen miteinander verbunden sind und des Sicherungselements, welches zwischen den Schneiden oberhalb des Bolzens geführt ist;
- Figur 5:: eine Ausführungsform einer einzelnen Metallschneide mit einer Aussparung in Form eines Schlitzes, durch welche das Sicherungselement geführt ist;
- Figur 6:: ein zweites Ausführungsbeispiel eines drehend spanabhebenden Werkzeugs mit einer Mehrzahl von radial vom Werkzeugkörper abstehenden Schneiden, wobei zwecks Illustration der Werkzeugkörper in einem Teil-Querschnitt gezeigt ist;
- Figur 7:: das Ausführungsbeispiel wie in Figur 6 mit dem Unterschied, dass das Sicherungselement den Werkzeugkörper auch in seiner Breite umfasst;
- Figur 8:: Aufsicht eines Werkzeuges mit einem im Werkzeug angebrachten Sicherungselement; und
- Figur 9:: eine dreidimensionale Schnittdarstellung eines Werkzeugs mit einem im Werkzeug angebrachten Sicherungselement, wobei das Sicherungselement vollständig abgebildet ist.

### DETAILIERTE BESCHREIBUNG DER FIGUREN

Im Folgenden stehen gleiche Bezugsziffern für gleiche oder funktionsgleiche Elemente (in unterschiedlichen Figuren). Ein zusätzlicher Apostroph kann zur Unterscheidung gleichartiger bzw. funktionsgleicher oder funktionsähnlicher Elemente in einer weiteren Ausführung dienen.

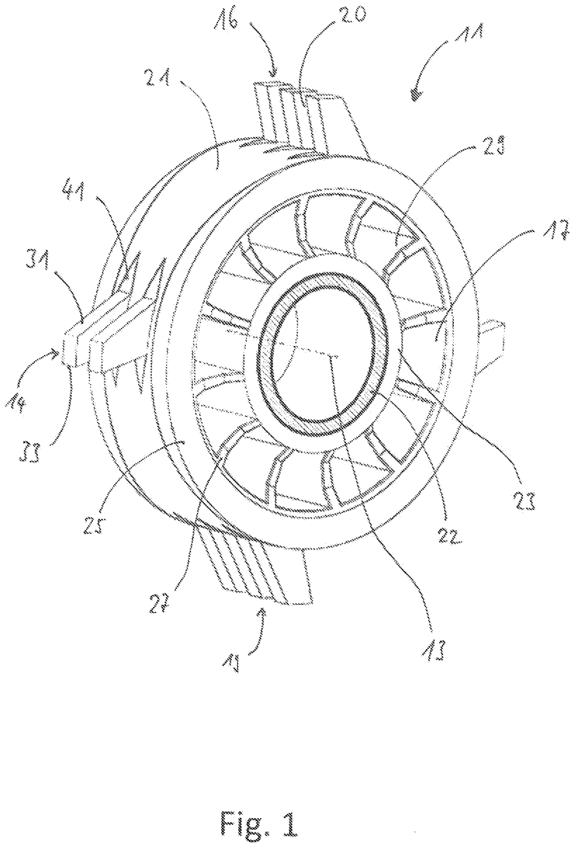

Die Figuren 1 bis 3 zeigen eine erste Ausführungsform eines erfindungsgemässen Werkzeuges 11 zur rotierenden und spanabhebenden Bearbeitung von Werkstücken, das in Kunststoff ausgeführt ist. Das Werkzeug 11 besitzt einen zylindrischen Werkzeugkörper 17 mit einem als Nabe 15 ausgebildeten inneren Ring 23 zur Aufnahme einer Antriebswelle (in den Figuren nicht gezeigt) und einem äusseren Ring 25, der durch eine Mehrzahl von Speichen 29 mit dem inneren Ring 23 verbunden ist. Am äusseren Ring 25 sind insgesamt vier radial vom Werkzeugkörper 17 abstehende Schneidenanordnungen 14, 16 fest angeordnet. Die Schneidenanordnung 14 umfasst dabei zwei im Abstand voneinander angeordnete Schneiden 31, und die Schneidenanordnung 16 umfasst drei im Abstand voneinander angeordnete Schneiden 31. Der Abstand zweier benachbarter Schneiden entspricht mindestens der Dicke einer Schneide. Die Schneidenanordnungen 14,16 sind am Werkzeugkörper 17 derart axial versetzt zueinander angeordnet, dass die Schneiden der Schneidenanordnung 14 die zwischen den Schneiden der Schneidenanordnung 16 bestehenden Spalte 20 abdecken. Damit kann das Werkzeug 11 eine bestimmte Arbeitsbreite entsprechend der Breite der Schneidenanordnung 16 abdecken und im Betrieb bearbeiten. Vorteilhaft entspricht die Breite resp. Schneidkantenlänge einer einzelnen Schneide 31 mindestens dem Abstand zweier benachbarten Schneiden. Je zwei Schneidenanordnungen 14 resp. 16 sind einander gegenüberliegend, d.h. um 180 Grad versetzt, am Werkzeugkörper 17 angeordnet. Dies verhindert im Betrieb Unwuchten. Die Schneiden einer Schneideanordnung 19 haben dabei in Drehrichtung jeweils die gleiche Ausrichtung.

Der Werkzeugkörper hat einen hohlzylindrischen Aufbau, wobei die Zylinderachse mit der Drehachse 13 zusammenfällt. Er umfasst einen inneren Ring der integral mit der Nabe 15 ist und den äusseren Ring 25, der durch eine Mehrzahl von radialen Rippen 29 mit dem inneren Ring verbunden ist. Die Nabe 15 besteht vorzugsweise aus einer Metallhülse 22, an welche der innere Ring 23 angespritzt ist.

Am äusseren Ring 25 sind die Schneidenanordnungen 14,16 in Drehrichtung alternierend fest angebracht, wobei diese zusätzlich von einem Sicherungselement 21 in Form eines Bandes gesichert sind. Im gezeigten Ausführungsbeispiel umfasst das Sicherungselement 21 den Werkzeugkörper in dessen Umfangsrichtung teilweise oder vorzugsweise vollständig. Das Sicherungselement ist insbesondere auf Zug beanspruchbar und ist in einer bevorzugten Ausführungsform eine Lage eines Faser-Verbund-Werkstoffes mit Filament- oder Endlosfasern. Die Filament- oder Endlosfasern haben mindestens die Länge des Werkzeugumfangs und sind in Umfangsrichtung angeordnet, damit das Sicherungselement 21 maximal auf Zug beansprucht werden kann. In einer alternativen und nicht erfindungsgemässen Ausführungsform kann das Sicherungselement 21 durch eine Umwicklung des Werkzeugkörpers mittels einer Endlosfaser realisiert sein. Als Fasern kommen vorteilhaft Glas-, Aramid- oder Kohlenstoff-Fasern zum Einsatz.

Der Werkzeugkörper 17 weist bevorzugt eine Leichtbau-Konstruktion auf und ist vorzugsweise aus einem Thermoplast hergestellt, der mit Kurzschnittfasern verstärkt sein kann. Denkbar ist auch, dass Duroplast für den Werkzeugkörper verwendet wird.

Die Schneiden 31 sind so am Werkzeugkörper 17 angeordnet, dass deren Schneidkanten 33 von der Drehachse 13 ausgehend auf einer gemeinsamen Umfangslinie liegen und dieser den äussersten Umfang des Werkzeuges 11 bildet. Die Schneidkanten 33 der Schneiden 31 verlaufen parallel zur Drehachse 13.

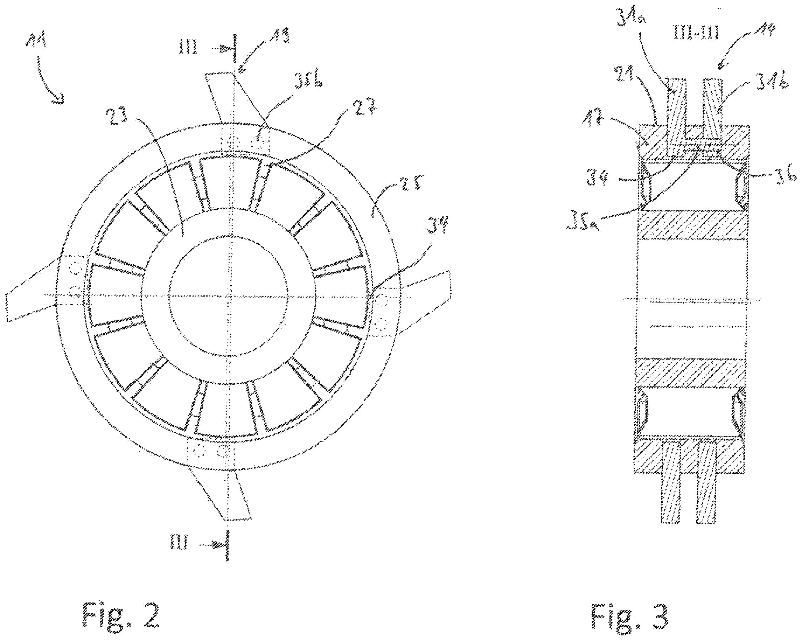

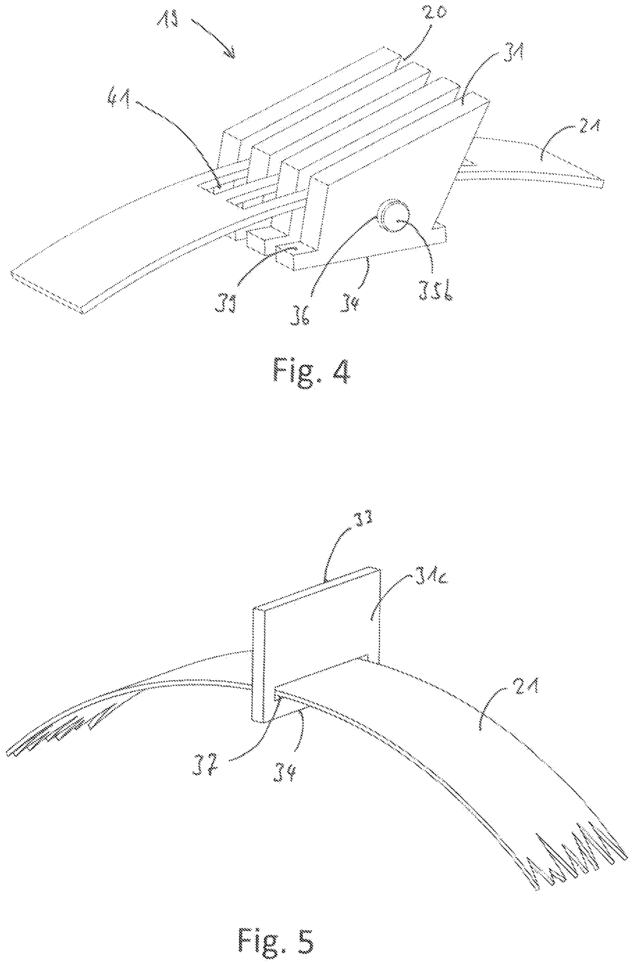

In Figur 3 ist eine Ausführungsform der Befestigung der Schneiden 31 am Werkzeugkörper 17 näher im Detail gezeigt. Bei der Metallschneide 31a der Schneidenanordnung 14 ist im Abstand vom unteren Rand 34 der Schneide ein senkrecht abstehender Bolzen 35a vorgesehen, der in ein auf gleicher Höhe liegendes Loch 36 in der benachbarten Schneide 31b eingreift. Ausserdem weisen die Schneiden am Fuss Vorsprünge 39 auf, die eine gute Verankerung im Werkzeugkörper ermöglichen (Fig. 4). Sowohl die Bolzenverbindung als auch die Vorsprünge sind im äusseren Ring formschlüssig verankert. Dies verhindert, dass diese im Betrieb bei hohen Drehzahlen sich vom Werkzeugkörper lösen können. Gemäss einer bevorzugten Ausführungsform sind die Schneiden 31 mit den Vorsprüngen 39 und dem sie verbindenden Bolzen vollständig umspritzt.

Das Sicherungselement 21 umfasst den Werkzeugkörper 17 in Umfangsrichtung und definiert eine äussere Lage, die integral mit dem äusseren Ring 25 ist. Der obere Teil der Schneiden 31 ragt dabei radial aus dem äusseren Ring 25 resp. dem Sicherungselement 21 heraus. Wie anhand der Figur 1 ersichtlich ist, weist das Sicherungselement 21 an jenen Stellen, wo die Schneiden 31 angeordnet sind, Aussparungen 41 in Form von Schlitzen auf. Diese Schlitze haben eine Grösse, die es den Schneiden 31 mit dem verlängerten Fussteil verunmöglicht, sich durch diese Schlitze zu bewegen (Fig. 1). Sollte daher der Werkzeugkörper 17 während des Betriebs aufgrund eines Materialfehlers bersten, sind die Schneiden 31 immer noch durch das Sicherungselement 21 gehalten. Auf der anderen Seite verleiht das Sicherungselement 21 dem Werkzeugkörper 17 eine grosse Stabilität und Steifigkeit, sodass der Werkzeugkörper 17 im Normalfall gar nicht bersten kann.

Figur 4 zeigt die Schneideanordnung 19 mit insgesamt vier Schneiden. Diese weisen im Abstand vom unteren Rand 34 ein Loch 36 auf, das der Aufnahme eines Bolzens 35b dient. Das Sicherungselement 21 wiederum weist Aussparungen 41 auf, durch welche sich die Schneiden erstrecken. In dieser Ausführungsform des Sicherungselementes 21 kann die Länge der Aussparungen 41 im Sicherungselement 21 jene des Vorsprungs 39 der Schneiden 31 überragen, solange eine formschlüssige Verbindung zwischen dem Bolzen 35b und dem Sicherungselement 21 gewährleistet ist.

In Figur 5 ist ein weiteres Beispiel für das Anbringen eines Sicherungselements 21 an einer Schneide 31c gezeigt. Die Schneide 31c weist gegenüberliegend der Schneidkante 33 und parallel zu dieser eine Aussparung in Form eines Schlitzes 37 auf, und das Sicherheitselement 21 ist durch diese Aussparung geführt. Dadurch ist eine formschlüssige Verbindung zwischen der Schneide 31 und dem im äusseren Ring 25 eingebetteten Sicherungselement 21 realisiert.

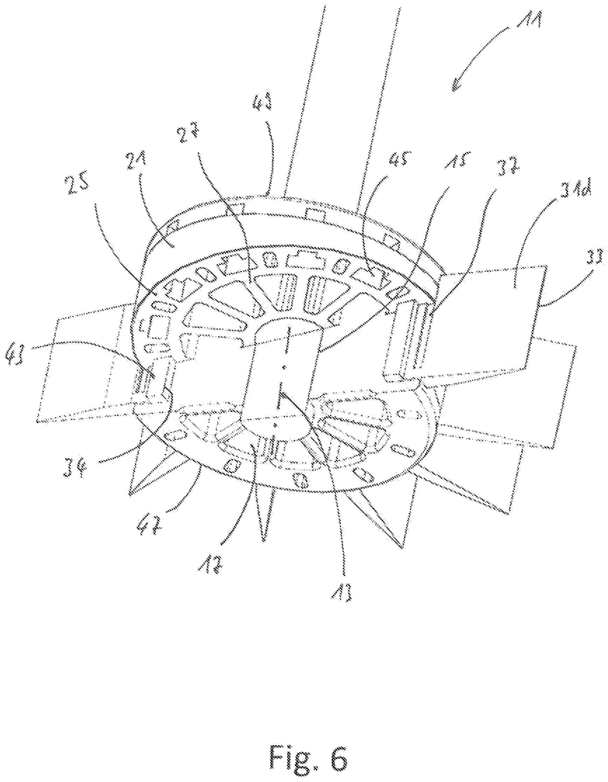

Figur 6 zeigt eine weitere Ausführungsform eines drehend spanabhebenden Werkzeuges 11. Der Aufbau des Werkzeugkörpers 17 ist grundsätzlich gleich wie bei der ersten Ausführungsform, allerdings mit dem Unterschied, dass Schneiden 31d mit einer anderen Form eingesetzt sind und die Schneidkanten entlang der Breitseite der Schneidplatten ausgebildet sind. An der der Schneidkante 33 gegenüberliegenden Seite der Schneide 34 ist eine stufenförmige Verbreiterung 43 senkrecht zur Plattenebene in beide Richtungen der Metallschneide 31 vorgesehen, so dass die Verbreiterung die Dicke der Metallschneide 31 überragt. Im äusseren Ring 25 des Werkzeugkörpers 17 sind dieser Verbreiterung der Schneiden 31 entsprechende Aussparungen 45 vorgesehen, in welche die Schneiden in Achsrichtung eingeschoben werden können. Dadurch ist eine formschlüssige Verbindung zwischen dem Werkzeugkörper 17 und den Schneiden 31 realisiert. In kurzem Abstand zur Verbreiterung 43 sind zudem Schlitze 37 parallel zu den Schneidkanten 33 vorgesehen. In diese Schlitze 37 kann zum einen ein Teil des Werkzeugkörpers 17 und zum anderen das Sicherungselement 21 zur Realisierung einer Formschlussverbindung eingreifen. Das Sicherungselement 21 ist in seiner Ausdehnung in Drehachsen-Richtung durch die Länge des Schlitzes 37 der Metallschneide 31 eingeschränkt.

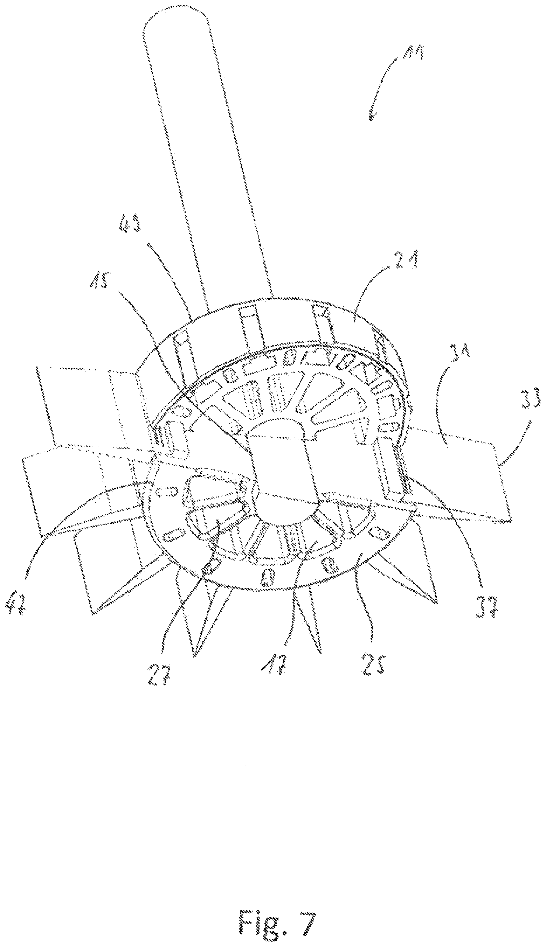

Figur 7 zeigt ein Ausführungsbeispiel eines drehend spanabhebenden Werkzeuges, welches sich lediglich aufgrund des Sicherungselementes 21 vom Ausführungsbeispiel in Figur 6 unterscheidet. Das Sicherungselement 21 ist in diesem Beispiel auch zusammen mit einem Teil des Werkzeugkörpers 17 durch die Schlitze 37 der Schneiden 31 durchgeführt. Jedoch überragt das Sicherungselement 21 in der Drehachsen-Richtung den Schlitz 37 der Schneiden 31 und umfasst den Werkzeugkörper 17 sowohl in Umfangsrichtung als auch in seiner Achsenrichtung von der unteren Kante 47 bis zur oberen Kante 49 des Werkzeugs. Das Sicherungselement 21 weist an den Stellen, wo keine Schneiden 31 vorgesehen sind, eine Ausdehnung in radialer Richtung auf, so dass etwa die Dicke des Sicherungselementes 21 an diesen Stellen doppelt so gross ist gegenüber jenen Stellen, wo das Sicherungselement 21 durch den Schlitz 37 der Schneiden 31 geführt ist.

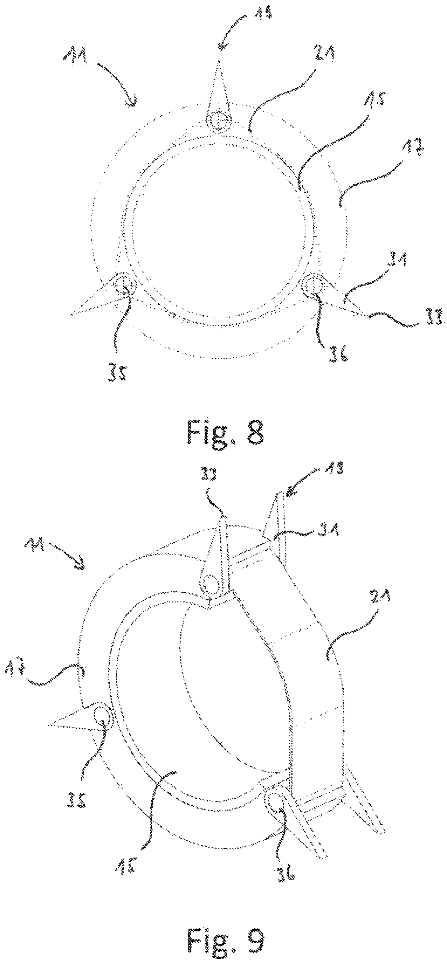

In Figur 8 ist eine weitere Ausführungsform des Werkzeuges 11 gezeigt. Dabei wird das Sicherungselement 21 in Form eines Bandes innerhalb des Werkzeugkörpers 17 geführt. Sowohl die Schneiden 31 als auch die Schneideanordnung 19 weisen eine formschlüssige Verbindung mit dem Werkzeugkörper 17 auf. Die Schneiden 31 umfassen ein Loch 36, welches am Fuss der Schneide 31 angebracht ist. Durch dieses Loch 36 ist ein Bolzen 35 geführt, so dass die Schneiden 31 über einen Bolzen 35 verbunden sind und eine Schneideanordnung 19 erzeugen. Die Schneideanordnungen 19 werden derart angeordnet, dass die Distanz zwischen ihnen stets am grössten ist. Dies sorgt für eine gleichmässige Belastung und Gewichtsverteilung im Werkzeug 11 und verhindert das Auftreten von Unwucht im Betrieb. Das Sicherungselement 21 umschliesst einen Teil der Schneideanordnung 19. In dieser Ausführung greift das Sicherungselement 21 um den Bolzen 35 der Schneideanordnung 19. Somit bildet der Bolzen 35 denjenigen Teil der Schneideanordnung 19, welcher vom Sicherungselement umfasst ist.

Möglich ist auch, dass bei einer höheren Anzahl Schneideanordnungen 19 mehrere Sicherungselemente 21 zur Verwendung kommen. Dabei muss nicht jedes Sicherungselement 21 alle Schneideordnungen 19 umfassen. Zum Beispiel können bei einem Werkzeug 11 mit vier Schneideanordnungen 19 zwei Sicherungselemente 21 angebracht sein, welche jeweils nur die zwei gegenüberliegend angeordneten Schneideanordnungen 19 umfassen, so dass alle Schneideanordnungen 19 durch mindestens ein Sicherungselement 21 gesichert sind.

Des Weiteren ist denkbar, dass die Schneide 31 einen zweiteiligen Aufbau aufweist. Dabei kann der Vorsprung 39 einer Schneide 31 als ein separates Bauteil ausgeführt sein. Der Vorsprung 39 der Schneide ist mit dem Werkzeugkörper 17 formschlüssig verbunden. Durch eine weitere formschlüssige Verbindung zwischen dem Vorsprung 39 der Schneide 31 und dem restlichen Bauteil der Schneide 31 ergibt sich eine formschlüssige Verbindung zwischen der ganzen Schneide 31 mit dem Werkzeugkörper 17.

In Figur 9 ist eine dreidimensionale Ansicht eines Werkezeuges 11 gezeigt, bei welchem ein Drittel des Werkzeugkörpers 17 nicht abgebildet ist, wobei das Sicherungselement 21 in seiner ganzen Ausführung gezeigt ist. In Figur 9 wird ersichtlich, wie das Sicherungselement 21 im Werkzeugkörper 17 angeordnet ist und die Bolzen 35 der Schneideanordnungen 19 umfasst. Die Nabe 15 bildet in dieser Ausführung den innersten Bereich des Werkzeuges 11. Die Form des Sicherungselements 21 ist so gewählt, dass das Sicherungselement 21 von einer Schneideanordnung zur anderen Schneideanordnung eine möglichst kurze Strecke zurücklegt, wobei es stets ausserhalb der Nabe 15 zu liegen kommt.

Das erfindungsgemässe Werkzeug gemäss dem ersten Ausführungsbeispiel aus Figur 1 - 3 wird wie folgt hergestellt:
Der Werkzeugkörper 17 wird aus Kunststoff mit einem Spritzgussverfahren hergestellt. Vor der Herstellung des Werkzeugkörpers 17 werden die Schneiden 31 in einer Vorrichtung eingespannt. Die Schneiden 31a werden derart in der Vorrichtung platziert, dass sie darin ihre finale Position, welche sie nach der Herstellung im Werkzeug 11 haben werden, einnehmen. In diesem Ausführungsbeispiel weist eine Schneide 31 einen senkrecht abstehenden Bolzen 35 auf, welcher durch ein Loch 36 in der benachbarten Schneide 31b eingreift und somit die Schneideanordnung 19 zusammen hält. Während dem Spritzgiessen des Werkzeugkörpers 17 umfasst dieser den unteren Teil der Schneideanordnung inklusive der Bolzenverbindung und führt zu einer formschlüssigen Verbindung zwischen den Schneiden 31 und dem Werkzeugkörper 17. Der Werkzeugkörper 17 wird in die jeweils gewünschte Form gespritzt und bedarf keiner weiteren Nachbearbeitung nach der Herstellung. Das Sicherungselement 21 in Form eines Bandes aus Faser-Verbund-Werkstoff kann auf unterschiedliche Art und Weise aufgetragen werden. Es kann aus in Polymer eingebundenen unidirektional ausgerichteten Fasern bestehen. Das Sicherungselement 21 in Form eines Faser-Verbund-Werkstoffs ist um den Werkzeugkörper 17 in Umfangsrichtung angebracht. Dabei ist es um die Schneiden 31 herum derart aufgetragen, dass an Stellen, wo sich Schneiden 31 befinden, Aussparungen 41 in Form von Schlitzen entstehen. Für das Erstellen der Verbindung zwischen dem Sicherungselement 21 und dem Werkzeugkörper 17 wird vom Bestehen beider Bauteile aus Kunststoff Gebrauch gemacht. Beide Bauteile werden auf die Temperatur erhitzt, bei welcher eines ein Bindungsmittel für das jeweils andere erzeugt und dadurch eine stoffschlüssige Verbindung zwischen den Bauteilen erstellt wird. Im Ausführungsbeispiel ist ein Sicherungselement 21 gezeigt, welches auf den Werkzeugkörper 17 aufgetragen wird, so dass Aussparungen 41 im Sicherungselement an Stellen zu stehen kommen, wo sich Schneiden 31 befinden. Genauso gut ist vorstellbar, dass das Sicherungselement 21 mit diesen Aussparungen 41 in Form von Schlitzen hergestellt wird und danach auf den Werkzeugkörper 17 aufgesetzt wird. In einer solchen Ausführung besteht das Sicherungselement 21 aus mehreren Stücken, welche auf dem Werkzeug sowohl untereinander als auch mit dem Werkzeugkörper 17 mithilfe des Schmelzverfahrens stoffschlüssig verbunden werden.

In einer nicht erfindungsgemäßen Ausführungsform kann anstelle eines Faser-Verbund-Werkstoffes für das Sicherungselement 21 auch lediglich eine Endlosfaser vorgesehen werden. Dieses wird um den Werkzeugkörper 17 mit den bereits befestigten Schneiden 31 in Umfangsrichtung gewickelt. Dadurch entsteht auch eine formschlüssige Verbindung zwischen der Endlosfaser und den Schneiden 31. Jedoch muss für das Erstellen einer formschlüssigen Verbindung zwischen der Endlosfaser und dem Werkzeugkörper 17 der Werkzeugkörper 17 nochmals soweit erhitzt werden, dass er mithilfe eines Schmelzverfahrens eine Verbindung mit den Endlosfasern eingehen kann.

Bei der Herstellung des zweiten Ausführungsbeispiels aus Figur 6 und 7 unterscheidet sich das Auftragen des Sicherungselementes 21 insofern, als die Schneiden 31 Schlitze 37 aufweisen, durch welche das Sicherungselement 21 gelegt wird. Der Werkzeugkörper 17 wird wieder so aufgespritzt, dass er mit den vorplatziert eingespannten Schneiden 31 eine formschlüssige Verbindung eingeht. Diese wird sowohl aufgrund der Schlitze 37 in den Schneiden als auch der am Fusse der Schneiden angebrachten Verbreiterung 43 erzielt. Das Sicherungselement 21 kommt durch die Schlitze 37 der Schneiden und auf dem Werkzeugkörper 21 in Umfangsrichtung zu liegen. Durch das Erhitzen beider Bauteile auf eine bestimmte materialspezifische Temperatur wird das Schmelzverfahren eingeleitet, wodurch eine stoffschlüssige Verbindung zwischen dem Sicherungselement 21 und dem Werkzeugkörper 17 erstellt wird.

Bei der Herstellung der Ausführungsform aus den Figuren 8 und 9 wird wiederum das Sicherungselement 21 vor der Herstellung des Werkzeugkörpers 17 formschlüssig mit den Schneideanordnungen 19 verbunden. Wie in den vorherigen Verfahren wird der Werkzeugkörper in einem Spritzguss-Verfahren hergestellt und erzeugt eine formschlüssige Verbindung sowohl mit dem Sicherungselement 21 als auch mit den Schneideanordnungen 19. In dieser Ausführung ist auch denkbar, dass mehrere Sicherungselemente 21 im Werkzeugkörper 17 angeordnet sind, wobei jede Schneideanordnung 19 von mindestens einem Sicherungselement 21 gesichert ist. Die Schneideanordnungen 19 werden dabei vom Sicherungselement 21 teilweise umfasst, so dass das Sicherungselement 21 um einen Abschnitt der Schneideanordnung 19 greift.

Während vorstehend spezifische Ausführungsformen beschrieben wurden, ist es offensichtlich, dass unterschiedliche Kombinationen der aufgezeigten Ausführungsmöglichkeiten angewendet werden können, insoweit sich die Ausführungsmöglichkeiten nicht gegenseitig ausschliessen.

### BEZUGSZEICHENLISTE:

- 11: Werkzeug
- 13: Drehachse
- 14: Schneideanordnung mit zwei Schneiden
- 15: Nabe
- 16: Schneideanordnung mit drei Schneiden
- 17: Werkzeugkörper
- 19: Schneideanordnung
- 20: Spalte
- 21: Sicherungselement
- 22: Metallhülse
- 23: Innerer Ring
- 25: Äusserer Ring
- 27: Verbindungsstück
- 29: Rippe
- 31a, 31b ,31c ,31d: Schneide
- 33: Schneidkante
- 34: Unterer Rand der Schneide
- 35a, 35b: Bolzen
- 36: Loch in Schneide
- 37: Schlitz in Schneide
- 39: Vorsprung an Schneide
- 41: Aussparungen in Sicherungselement
- 43: Verbreiterung senkrecht zur Scheidenebene
- 45: Aussparungen im Werkzeugkörper
- 47: Untere Kante
- 49: Obere Kante

## Patentansprüche

1. Werkzeug (11) zur rotierenden und spanabhebenden Bearbeitung von Werkstücken mit
- einem Werkzeugkörper (17),
- einer Mehrzahl von am Werkzeugkörper (17) angeordneten Schneiden (31), welche in Schneideanordnungen (19) angeordnet sind, und
- einem Sicherungselement (21), das die Schneideanordnungen (19) am Werkzeugkörper (17) sichert, sodass die Schneiden (31) sich im Betrieb nicht vom Werkzeugkörper (17) lösen können,
**wobei**
- der Werkzeugkörper (17) aus Kunststoff hergestellt ist,
- die Schneiden (31) im Werkzeugkörper (17) integriert sind, und
- **dadurch gekennzeichnet,**
**dass** das Sicherungselement (21) als ein im Werkzeugkörper (17) integriertes Sicherungsband realisiert ist, das die Schneideanordnung (19) teilweise umfasst, und ein Faser-Verbund-Werkstoff mit einem Fasergehalt von mindestens 10% ist und
**dass** der Faser-Verbund-Werkstoff unidirektionale Fasern aufweist und so angeordnet ist, dass diese Fasern in Umfangsrichtung des Werkzeuges (11) ausgerichtet sind.

2. Werkzeug (11) nach Anspruch 1, **dadurch gekennzeichnet, dass** das Sicherungsband den Werkzeugkörper (17) in Umfangsrichtung umgibt.

3. Werkzeug (11) nach Anspruch 1, **dadurch gekennzeichnet, dass** die Fasern im Sicherungselement (21) Endlosfasern sind.

4. Werkzeug (11) nach Anspruch 3, **dadurch gekennzeichnet, dass** die Wickelrichtung der Endlosfasern parallel zur Breitseite der Schneiden (31) ist.

5. Werkzeug (11) nach einem der Ansprüche 1 bis 4, **dadurch gekennzeichnet, dass**
die Schneiden (31) am Werkzeugkörper (17) formschlüssig angebracht sind.

6. Werkzeug (11) nach einem der Ansprüche 1 bis 5, **dadurch gekennzeichnet, dass**
die Schneiden (31) jeweils einen Schlitz (37) aufweisen, durch welche das Sicherungselement (21) geführt ist.

7. Werkzeug (11) nach einem der Ansprüche 1 bis 6, **dadurch gekennzeichnet, dass**
die Schneiden (31) an den Werkzeugkörper (17) durch Spritzgiessen des Werkzeugkörpers (17) befestigt sind.

8. Werkzeug (11) nach einem der Ansprüche 1 bis 7, **dadurch gekennzeichnet, dass**
der Werkzeugkörper (17) einen inneren Ring (23) und einen äusseren Ring (25) aufweist, wobei der innere (23) und äussere Ring (25) mittels einer Mehrzahl von Rippen (29) miteinander verbunden sind.

9. Werkzeug (11) nach Anspruch 8, **dadurch gekennzeichnet, dass** der innere Ring (23) als Nabe (15) ausgebildet ist.

10. Werkzeug (11) nach Anspruch 8 oder 9, **dadurch gekennzeichnet, dass** der innere (23) und äussere Ring (25) und die Rippen (29) im Werkzeugkörper (17) alle im Wesentlichen die gleiche Wandstärke besitzen.

11. Werkzeug (11) nach einem der Ansprüche 1 bis 10, **dadurch gekennzeichnet, dass**
das Sicherungselement (21) stoffschlüssig mit dem Werkzeugkörper (17) verbunden ist.

12. Werkzeug (11) nach einem der Ansprüche 1 bis 11, **dadurch gekennzeichnet, dass**
die Schneiden (31) im Werkzeugkörper (17) nicht auswechselbar sind.

13. Werkzeug (11) nach einem der Ansprüche 1 bis 12, **dadurch gekennzeichnet, dass**
ein Bolzen (35) durch ein Loch (36) in den Schneiden (31) einer Schneideanordnung (19) geführt ist und der Bolzen (35) mit dem Sicherungselement (21) formschlüssig verbunden ist.

## Claims

1. Tool (11) for the rotary and cutting machining of workpieces having
- a tool body (17),
- a plurality of blades (31) arranged on the tool body (17), which are arranged in blade arrangements (19), and
- a securing element (21) that secures the blade arrangements (19) to the tool body (17) such that the blades (31) cannot detach from the tool body (17) during operation, wherein
- the tool body (17) is produced of plastic,
- the blades (31) are incorporated into the tool body (17),
**characterized in that**
- the securing element (21) is realized as a securing strip which is incorporated in the tool body (17) and partially surrounds the blade arrangement (19) and is a fiber composite material with a fiber content of at least 10%, and
**in that** the fiber composite material comprises unidirectional fibers and is arranged in such a way that these fibers are aligned in the circumferential direction of the tool (11).

2. Tool (11) according to claim 1, **characterized in that** the securing strip surrounds the tool body (17) in the circumferential direction.

3. Tool (11) according to claim 1, **characterized in that** the fibers in the securing element (21) are continuous fibers.

4. Tool (11) according to claim 3, **characterized in that** the winding direction of the continuous fibers is parallel to the broadside of the blades (31).

5. Tool (11) according to any one of the claims 1 to 4, **characterized in that** the blades (31) are positively locked to the tool body (17).

6. Tool (11) according to one of claims 1 to 5, **characterized in that** the blades (31) each have a slot (37) through which the securing element (21) is guided.

7. Tool (11) according to any one of claims 1 to 6, **characterized in that** the blades (31) are attached to the tool body (17) by injection molding of the tool body (17).

8. A tool (11) according to any one of claims 1 to 7, **characterized in that** the tool body (17) comprises an inner ring (23) and an outer ring (25), the inner (23) and outer rings (25) being connected to each other by means of a plurality of ribs (29).

9. Tool (11) according to claim 8, **characterized in that** the inner ring (23) is formed as a hub (15).

10. Tool (11) according to claim 8 or claim 9, **characterized in that** the inner (23) and outer rings (25) and the ribs (29) in the tool body (17) all have substantially the same wall thickness.

11. Tool (11) according to any one of claims 1 to 10, **characterized in that** the securing element (21) is firmly bonded to the tool body (17).

12. Tool (11) according to any one of claims 1 to 11, **characterized in that** the blades (31) in the tool body (17) are not replaceable.

13. Tool (11) according to one of claims 1 to 12, **characterized in that** a bolt (35) is guided through a hole (36) in the blades (31) of a blade arrangement (19) and the bolt (35) is positively locked to the securing element (21).

## Revendications

1. Outil (11) pour l'usinage rotatif et par enlèvement de copeaux de pièces avec
- un corps d'outil (17),
- une multitude de lames (31), disposées sur le corps d'outil (17), qui sont disposées dans des arrangements de lames (19) et
- un élément de sécurité (21) qui sécurise les arrangements de lames (19) sur le corps d'outil (17) si bien que les lames (31) ne peuvent pas se détacher en fonctionnement du corps d'outil (17),
cependant que
- le corps d'outil (17) est fabriqué en matière plastique,
- les lames (31) sont intégrées au corps d'outil (17) et
**caractérisé en ce**
**que** l'élément de sécurité (21) est réalisé comme une bande de sécurité intégrée au corps d'outil (17) qui entoure partiellement l'arrangement de lames (19) et est un matériau composite en fibres avec un taux de fibres d'au moins 10%
et
**que** le matériau composite en fibres présentes des fibres unidirectionnelles et est placé de telle manière que ces fibres sont orientées dans le sens de la circonférence de l'outil (11).

2. Outil (11) selon la revendication 1, **caractérisé en ce que** la bande de sécurité enveloppe le corps d'outil (17) dans le sens de la circonférence de l'outil (11).

3. Outil (11) selon la revendication 1, **caractérisé en ce que** les fibres dans l'élément de sécurité (21) sont des fibres continues.

4. Outil (11) selon la revendication 3, **caractérisé en ce que** le sens d'enroulement des fibres continues est parallèle au côté large des lames (31).

5. Outil (11) selon l'une des revendications 1 à 4, **caractérisé en ce que** les lames (31) sont montées par conjugaison de formes sur le corps d'outil (17).

6. Outil (11) selon l'une des revendications 1 à 5, **caractérisé en ce que** les lames (31) présentent chacune une fente (37) par laquelle l'élément de sécurité (21) est guidé.

7. Outil (11) selon l'une des revendications 1 à 6, **caractérisé en ce que** les lames (31) sont fixées au corps d'outil (17) par moulage par injection du corps d'outil (17).

8. Outil (11) selon l'une des revendications 1 à 7, **caractérisé en ce que** le corps d'outil (17) présente un anneau intérieur (23) et un anneau extérieur (25), cependant que l'anneau intérieur (23) et l'anneau extérieur (25) sont reliés l'un à l'autre au moyen d'une multitude de nervures (29).

9. Outil (11) selon la revendication 8, **caractérisé en ce que** l'anneau intérieur (23) est configuré comme un moyeu (15).

10. Outil (11) selon la revendication 8 ou 9, **caractérisé en ce que** l'anneau intérieur (23) et l'anneau extérieur (25) et les nervures (29) dans le corps d'outil (17) possèdent tous substantiellement la même épaisseur de paroi.

11. Outil (11) selon l'une des revendications 1 à 10, **caractérisé en ce que** l'élément de sécurité (21) est relié par liaison de matière au corps d'outil (17).

12. Outil (11) selon l'une des revendications 1 à 11, **caractérisé en ce que** les lames (31) dans le corps d'outil (17) ne sont pas remplaçables.

13. Outil (11) selon l'une des revendications 1 à 12, **caractérisé en ce qu'**un boulon (35) est guidé à travers un trou (36) dans les lames (31) d'un arrangement de lames (19) et le boulon (35) est relié par conjugaison de formes à l'élément de sécurité (21).
